# EUROPEAN PATENT APPLICATION

(11) **EP 2 682 576 A1**
(43) Date of publication of application: **08.01.2014**
(21) Application number: 11859811.9
(22) Date of filing: 03.03.2011
(51) Int. Cl.: F01N 3/08, F01N 3/20

(54) **CATALYST DETERIORATION DETERMINING SYSTEM**

(71) Applicant: TOYOTA JIDOSHA KABUSHIKI KAISHA, Toyota-shi, Aichi-ken, 471-8571 (JP)
(72) Inventor: NAKAMURA, Yoshitaka, Toyota-shi, Aichi-ken, 471-8571 (JP); SAITO, Hirotaka, Toyota-shi, Aichi-ken, 471-8571 (JP); KIDOKORO, Toru, Toyota-shi, Aichi-ken, 471-8571 (JP); SAWADA, Hiroshi, Toyota-shi, Aichi-ken, 471-8571 (JP)
(74) Representative: Intès, Didier Gérard André
(86) International application number: PCT/JP2011/054918
(87) International publication number: WO 2012/117552

(57) **Abstract**

The deterioration judgment for an absorption reduction type NOx catalyst (4) is performed quickly and correctly. A catalyst deterioration judging system comprises a judging unit (10) which judges that the absorption reduction type NOx catalyst (4) is deteriorated if a detected value of an NH₃ detecting unit (8) is not more than a threshold value within a predetermined time immediately after starting supply of a reducing agent from a supply unit (5) while regulating an amount of the reducing agent so that the air-fuel ratio of an exhaust gas is a rich air-fuel ratio by means of a control unit (10) when NOx is absorbed by the absorption reduction type NOx catalyst (4).

## Description

### TECHNICAL FIELD

The present invention relates to a catalyst deterioration judging system.

### BACKGROUND ART

A technique is known, wherein the reduction control is executed for NOx absorbed in an absorption reduction type NOx catalyst (hereinafter simply referred to as "NOx catalyst" as well), and then it is judged that the NOx catalyst is deteriorated if the NOx concentration, which is detected by a NOx sensor disposed on the downstream side from the NOx catalyst, is not less than a predetermined concentration at a point in time at which an estimated value of the absorption amount of NOx in the NOx catalyst arrives at a reference value (see, for example, Patent Document 1).

However, it is necessary to wait until a large amount of NOx is absorbed and stored in the NOx catalyst, and a long time is required to judge the deterioration or degradation of the NOx catalyst. For this reason, if the NOx catalyst is deteriorated or degraded, it is feared that NOx may outflow during a period until the deterioration judgment is completed.

Another technique is known, wherein the concentration of NH₃, which is provided when the air-fuel ratio is made rich, is detected by a NOx sensor disposed on the downstream side from a NOx catalyst, and an excessive amount of the reducing agent is determined from the change of the concentration of NH₃ (see, for example, Patent Document 2).

Still another technique is known, wherein the deterioration state of a NOx catalyst is judged on the basis of an output value of a NOx sensor disposed on the downstream side from the NOx catalyst, when a reducing atmosphere is provided (see, for example, Patent Document 3). The deterioration of the NOx catalyst indicates the sulfur poisoning of the NOx catalyst. This judgment is performed after waiting for the stabilization of the NOx concentration. Therefore, the time, which is required for the deterioration judgment, is prolonged.

### PRECEDING TECHNICAL DOCUMENTS

### Patent Documents:

Patent Document 1: JP2007-162468A;
Patent Document 2: JP2002-180865A;
Patent Document 3: JP11-229849A.

### SUMMARY OF THE INVENTION

### Task to Be Solved by the Invention:

The present invention has been made taking the foregoing problem into consideration, an object of which is to provide such a technique that the deterioration judgment can be performed for an absorption reduction type NOx catalyst quickly and correctly.

### Solution for the Task:

In order to achieve the object as described above, according to the present invention, there is provided a catalyst deterioration judging system for judging deterioration of an absorption reduction type NOx catalyst which is provided at an exhaust gas passage of an internal combustion engine to absorb NOx and which reduces the absorbed NOx in accordance with supply of a reducing agent, the catalyst deterioration judging system comprising:
a supply unit which supplies the reducing agent to the absorption reduction type NOx catalyst and which thereby changes an air-fuel ratio of an exhaust gas allowed to pass through the absorption reduction type NOx catalyst;
an NH₃ detecting unit which detects NH₃ contained in the exhaust gas at a downstream position from the absorption reduction type NOx catalyst;
a control unit which regulates an amount of the reducing agent so that the air-fuel ratio of the exhaust gas is a rich air-fuel ratio when the reducing agent is supplied from the supply unit; and
a judging unit which judges that the absorption reduction type NOx catalyst is deteriorated if a detected value of the NH₃ detecting unit is not more than a threshold value within a predetermined time immediately after starting the supply of the reducing agent from the supply unit while regulating the amount of the reducing agent so that the air-fuel ratio of the exhaust gas is the rich air-fuel ratio by means of the control unit when NOx is absorbed by the absorption reduction type NOx catalyst.

The absorption reduction type NOx catalyst absorbs NOx when the lean air-fuel ratio is provided, and the absorption reduction type NOx catalyst reduces the absorbed NOx when the reducing agent is present. The supply unit can supply the reducing agent to the absorption reduction type NOx catalyst. The reducing agent may be supplied into the exhaust gas allowed to flow through the exhaust gas passage, or the reducing agent may be discharged from the internal combustion engine. The air-fuel ratio of the exhaust gas is lowered by supplying the reducing agent.

In this context, when the reducing agent is supplied to the absorption reduction type NOx catalyst, H₂ and/or HC is/are reacted with NO to produce NH₃ in some cases. When the absorption reduction type NOx catalyst is deteriorated or degraded, the reduction efficiency is lowered in the absorption reduction type NOx catalyst. That is, the amount of absorbed or stored NOx is decreased, and the amount of NOx, which is liberated or released from the absorption reduction type NOx catalyst when the rich air-fuel ratio is provided, is also decreased. For this reason, the amount of produced NH₃ is also decreased. Therefore, the detected value of the NH₃ detecting unit, which is obtained when the reducing agent is supplied while aiming at the target of the rich air-fuel ratio, is decreased depending on the degree of the deterioration or degradation of the absorption reduction type NOx catalyst.

This phenomenon appears in a short time after starting the supply of the reducing agent. Therefore, it is possible to perform the deterioration judgment within the predetermined time immediately after starting the supply of the reducing agent. The predetermined time, which is referred to herein, is the time in which NH₃ is produced in accordance with the supply of the reducing agent.

If the detected value of the NH₃ detecting unit, which is to be provided when the absorption reduction type NOx catalyst is at a boundary between the occurrence of deterioration and no occurrence of deterioration, is set as the threshold value beforehand, it is possible to judge that the absorption reduction type NOx catalyst is deteriorated if the detected value of the NH₃ detecting unit is not more than the threshold value.

In this way, it is possible to raise the judgment accuracy by performing the deterioration judgment when NH₃ is produced. Further, the deterioration judgment can be performed immediately after the supply of the reducing agent. Therefore, it is possible to perform the deterioration judgment quickly or promptly.

In the present invention, the predetermined time may be 10 seconds. That is, NH₃ is produced sufficiently when 10 seconds elapse after starting the supply of the reducing agent. Therefore, it is possible to perform the deterioration judgment for the absorption reduction type NOx catalyst. The deterioration judgment can be performed in the short period of time of 10 seconds. Therefore, it is possible to perform the deterioration judgment quickly or promptly.

In the present invention, the judging unit can judge that the absorption reduction type NOx catalyst is deteriorated if a maximum value of the detected values of the NH₃ detecting unit is not more than the threshold value.

In this context, the higher the degree of the deterioration of the absorption reduction type NOx catalyst is, the smaller the amount of produced NH₃ is. Therefore, the maximum value of the detected values of the NH₃ detecting unit is decreased. The threshold value is set as the value at which the maximum value of the detected values of the NH₃ detecting unit is unallowable. That is, the threshold value can be the upper limit value of the maximum value of the detected values of the NH₃ detecting unit when the absorption reduction type NOx catalyst is deteriorated. When the maximum value of the detected values of the NH₃ detecting unit is compared with the threshold value, it is possible to judge whether or not the absorption reduction type NOx catalyst is deteriorated. If the maximum value of the detected values of the NH₃ detecting unit is larger than the threshold value, it is judged that the absorption reduction type NOx catalyst is normal. In this way, when the deterioration judgment is performed by using the maximum value of the detected values of the NH₃ detecting unit which correlates with the degree of the deterioration of the absorption reduction type NOx catalyst, it is possible to perform the deterioration judgment easily and correctly.

In the present invention, the judging unit can judge that the absorption reduction type NOx catalyst is deteriorated if an added-up value of the detected values of the NH₃ detecting unit is not more than the threshold value.

The added-up value of the detected values of the NH₃ detecting unit is also decreased depending on the degree of the deterioration of the absorption reduction type NOx catalyst, in the same manner as the maximum value of the detected values of the NH₃ detecting unit. The added-up value is obtained, for example, by adding the detected values of the NH₃ detecting unit for every predetermined time. The threshold value is set beforehand as the value at which the added-up value of the detected values of the NH₃ detecting unit is unallowable. When the added-up value of the detected values of the NH₃ detecting unit is compared with the threshold value, it is possible to judge whether or not the absorption reduction type NOx catalyst is deteriorated. In this procedure, the threshold value can be the upper limit value of the added-up value of the detected values of the NH₃ detecting unit when the absorption reduction type NOx catalyst is deteriorated. If the added-up value of the detected values of the NH₃ detecting unit is larger than the threshold value, it is judged that the absorption reduction type NOx catalyst is normal. In this way, when the deterioration judgment is performed by using the added-up value of the detected values of the NH₃ detecting unit which correlates with the degree of the deterioration of the absorption reduction type NOx catalyst, it is possible to perform the deterioration judgment easily and correctly.

In the present invention, the control unit can regulate the amount of the reducing agent so that the air-fuel ratio of the exhaust gas is the rich air-fuel ratio and an amount of production of NH₃ is maximized at the air-fuel ratio.

In this context, the amount of production of NH₃ is decreased at the rich air-fuel ratio in the vicinity of the theoretical air-fuel ratio, and hence the difference in the detected value of the NH₃ detecting unit is decreased between the case in which the absorption reduction type NOx catalyst is normal and the case in which the absorption reduction type NOx catalyst is deteriorated. Therefore, it is feared that the accuracy of the deterioration judgment may be lowered. In relation thereto, the air-fuel ratio, at which the amount of production of NH₃ is most increased, is present. Therefore, when this air-fuel ratio is used as the target, it is possible to increase the difference in the detected value of the NH₃ detecting unit between the case in which the absorption reduction type NOx catalyst is normal and the case in which the absorption reduction type NOx catalyst is deteriorated. Accordingly, it is possible to improve the accuracy of the deterioration judgment.

In the present invention, the NH₃ detecting unit may be a NOx sensor which detects NOx and NH₃ contained in the exhaust gas.

In this context, the NOx sensor also detects NH₃ equivalently to NOx. Therefore, it is impossible to discriminate whether the detected value of the NOx sensor resides in, for example, the concentration of NO₂ or the concentration of NH₃. However, when the reducing agent is supplied until the rich air-fuel ratio is provided, NOx is scarcely contained in the exhaust gas on the downstream side from the absorption reduction type NOx catalyst. Therefore, the detected value of the NOx sensor indicates the concentration of NH₃. Therefore, it is possible to detect NH₃ by using the NOx sensor.

### EFFECT OF THE INVENTION

According to the present invention, it is possible to perform the deterioration judgment for the absorption reduction type NOx catalyst quickly and correctly.

### BRIEF DESCRIPTION OF THE DRAWINGS

Fig. 1 shows a schematic arrangement of an internal combustion engine and an exhaust system thereof according to an embodiment.
Fig. 2 illustrates the NOx absorption action in relation to a NOx catalyst.
Fig. 3 illustrates the NOx reduction action in relation to the NOx catalyst.
Fig. 4 shows a relationship between the air-fuel ratio of the exhaust gas and the NH₃ concentration on the downstream side from the NOx catalyst during the rich spike control concerning the embodiment.
Fig. 5 shows a relationship between the air-fuel ratio and the NH₃ concentration on the downstream side from the NOx catalyst during the supply of a reducing agent.
Fig. 6 shows a flow chart illustrating a flow of the deterioration judgment for the NOx catalyst.

### MODE FOR CARRYING OUT THE INVENTION

A specified embodiment of the catalyst deterioration judging system according to the present invention will be explained below on the basis of the drawings.

### First Embodiment

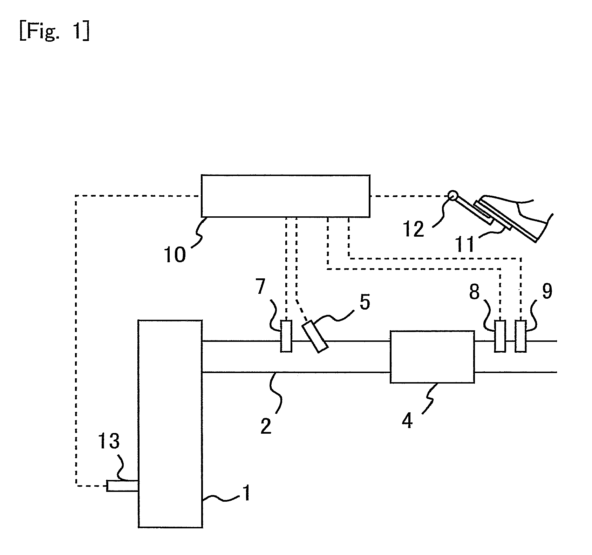

Fig. 1 shows a schematic arrangement of an internal combustion engine and an exhaust system thereof according to an embodiment of the present invention. The internal combustion engine 1 shown in Fig. 1 is a water-cooled four-cycle diesel engine having four cylinders.

An exhaust gas passage 2 is connected to the internal combustion engine 1. An absorption reduction type NOx catalyst 4 (hereinafter referred to as "NOx catalyst 4") is provided at an intermediate position of the exhaust gas passage 2.

The NOx catalyst 4 is constructed such that alumina (Al₂O₃) is used, for example, as a carrier, and barium (Ba) and platinum (Pt) are carried, for example, on the carrier.

The NOx catalyst 4 has such a function that NOx contained in the exhaust gas is absorbed when the oxygen concentration of the inflowing exhaust gas is high, and absorbed NOx is reduced when the oxygen concentration of the inflowing exhaust gas is lowered and a reducing agent is present.

Further, an injection valve 5, which injects the reducing agent into the exhaust gas, is attached to the exhaust gas passage 2 at an upstream position from the NOx catalyst 4. The injection valve 5 is opened in accordance with a signal supplied from ECU 10 as described later on to inject the reducing agent into the exhaust gas. For example, the fuel (light oil) for the internal combustion engine 1 is used as the reducing agent. However, there is no limitation thereto.

The fuel, which is injected from the injection valve 5 into the exhaust gas passage 2, lowers the air-fuel ratio of the exhaust gas allowed to flow from the upstream of the exhaust gas passage 2. When NOx, which is absorbed and stored in the NOx catalyst 4, is reduced, the fuel is injected from the injection valve 5 to thereby execute the so-called rich spike control in which the air-fuel ratio of the exhaust gas allowed to inflow into the NOx catalyst 4 is lowered in a relatively short cycle. The amount of the reducing agent injected from the injection valve 5 is determined, for example, on the basis of the operation state (the number of revolutions of the engine and the fuel injection amount) of the internal combustion engine 1. The relationship among the reducing agent amount, the number of revolutions of the engine, and the engine load can be previously mapped. An air-fuel ratio sensor may be attached to the exhaust gas passage 2, and the reducing agent amount may be subjected to the feedback control so that the air-fuel ratio, which is detected by the air-fuel ratio sensor, has a target value.

In this embodiment, the injection valve 5 corresponds to the supply unit according to the present invention. Alternatively, the reducing agent can be also supplied by discharging or exhausting unburned fuel from the internal combustion engine 1. That is, an intra-cylinder injection valve for injecting the fuel into a cylinder may be provided, wherein the subsidiary injection (post injection) is performed such that the fuel is injected again during the exhaust stroke or the expansion stroke after performing the main injection from the intra-cylinder injection valve, or the fuel injection timing from the intra-cylinder injection valve is delayed. Accordingly, it is also possible to discharge or exhaust a gas containing a large amount of the reducing agent from the internal combustion engine 1.

An upstream side NOx sensor 7 for measuring the NOx concentration in the exhaust gas is attached to the exhaust gas passage 2 at an upstream position from the injection valve 5. Further, a downstream side NOx sensor 8 for measuring the NOx concentration in the exhaust gas and a temperature sensor 9 for measuring the temperature of the exhaust gas are attached to the exhaust gas passage 2 at downstream positions from the NOx catalyst 4. In this embodiment, the downstream side NOx sensor 8 corresponds to the NH₃ detecting unit or the NOx sensor according to the present invention.

ECU 10, which is an electronic control unit for controlling the internal combustion engine 1, is provided in combination with the internal combustion engine 1 constructed as described above. ECU 10 controls the operation state of the internal combustion engine 1 in accordance with the operation condition of the internal combustion engine 1 and any request of a driver.

In addition to the sensors as described above, those connected to ECU 10 via electric wiring lines are an accelerator opening degree sensor 12 which outputs an electric signal corresponding to a pedaling amount of an accelerator pedal 11 pedaled by the driver to detect the engine load, and a crank position sensor 13 which detects the number of revolutions of the engine. Output signals of the various sensors are inputted into ECU 10.

On the other hand, the injection valve 5 is connected to ECU 10 via an electric wiring line. The opening/closing timing of the injection valve 5 is controlled by ECU 10. In this embodiment, ECU 10, which regulates the reducing agent amount supplied from the injection valve 5, corresponds to the control unit according to the present invention.

ECU 10 allows the injection valve 5 to inject the reducing agent within a range in which the air-fuel ratio of the exhaust gas is rich, and the deterioration judgment is performed for the NOx catalyst 4 on the basis of the NH₃ concentration detected by the downstream side NOx sensor 8 in this situation. In this procedure, NOx and NH₃ are detected as NOx by the downstream side NOx sensor 8. Therefore, it is difficult to discriminate whether NH₃ is detected by the downstream side NOx sensor 8 or NOx is detected by the downstream side NOx sensor 8. However, when the air-fuel ratio of the exhaust gas is the rich air-fuel ratio, NOx is scarcely contained in the exhaust gas allowed to outflow from the NOx catalyst 4. Therefore, the compound, which is detected by the downstream side NOx sensor 8 in this situation, is NH₃.

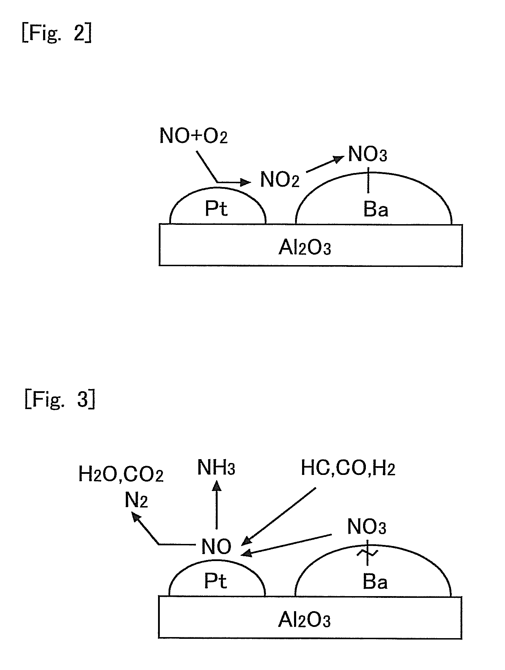

In this context, Fig. 2 illustrates the NOx absorption action in relation to the NOx catalyst 4. Further, Fig. 3 illustrates the NOx reduction action in relation to the NOx catalyst 4.

When the air-fuel ratio of the exhaust gas is lean, the NOx catalyst 4 is operated such that NO is oxidized with O₂ on Pt and the product is absorbed as Ba(NO₃)₂ on Ba. On the other hand, when the reducing agent is supplied so that the air-fuel ratio of the exhaust gas is rich, then Ba(NO₃)₂ is subjected to the conversion into NO₂ which is released or liberated and which is further reduced into N₂ on Pt. In this process, NO and H₂ are reacted to produce NH₃ and H₂O on the NOx catalyst 4. Further, HC and NO are reacted to produce NH₃, H₂O, and CO₂. NH₃, which is produced as described above, is reacted with H₂ or O₂ to produce NO in the downstream side NOx sensor 8. Therefore, NH₃ is detected as NOx. That is, NH₃ is detected by the downstream side NOx sensor 8.

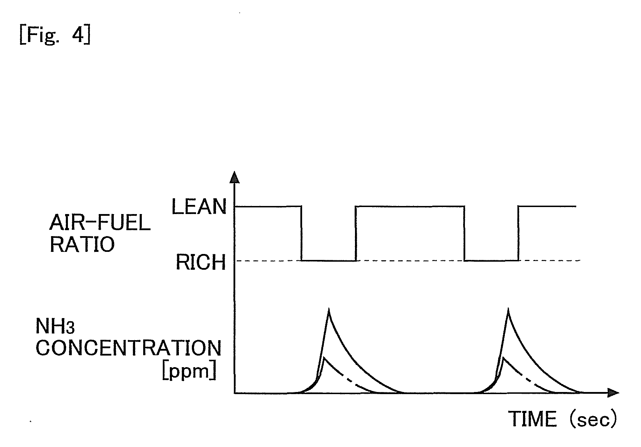

Fig. 4 shows a relationship between the air-fuel ratio of the exhaust gas and the NH₃ concentration on the downstream side from the NOx catalyst 4 during the rich spike control according to this embodiment. In relation to the NH₃ concentration, the solid line indicates a case in which the NOx catalyst 4 is normal, and the alternate long and short dash line indicates a case in which the NOx catalyst 4 is deteriorated. The lean air-fuel ratio is provided before supplying the reducing agent, and the rich air-fuel ratio is provided after supplying the reducing agent. In this context, the longer the period of time of the injection of the reducing agent from the injection valve 5 is, the larger the supply amount of the reducing agent is, the larger the amount of decrease in the air-fuel ratio is. Therefore, it is possible to regulate the air-fuel ratio of the exhaust gas by regulating the injection period of the reducing agent.

When the air-fuel ratio of the exhaust gas is the rich air-fuel ratio, NH₃ is released from the NOx catalyst 4. In this context, when the NOx catalyst 4 is deteriorated, the reduction efficiency is lowered in the NOx catalyst 4. Therefore, when the reducing agent is supplied so that the rich air-fuel ratio is provided, the amount of NOx liberated from the NOx catalyst 4 is decreased. Further, the surface area (superficial area) of Pt is decreased. Therefore, the amount of production of NH₃ as explained with reference to Fig. 3 is decreased as well. Therefore, the amount of NH₃ allowed to outflow to the downstream from the NOx catalyst 4 is decreased depending on the degree of the deterioration of the NOx catalyst 4. That is, when NH₃, which is allowed to outflow from the NOx catalyst 4, is detected by the downstream side NOx sensor 8, it is possible to judge the deterioration of the NOx catalyst 4.

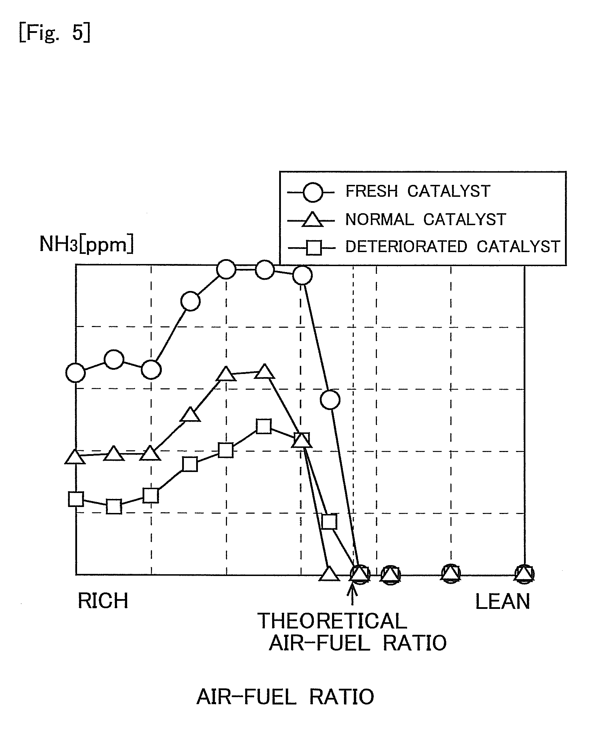

In this context, Fig. 5 shows a relationship between the air-fuel ratio and the NH₃ concentration on the downstream side from the NOx catalyst 4 during the supply of the reducing agent. The "fresh catalyst" indicates the NOx catalyst 4 newly installed to the vehicle. The "fresh catalyst" is in such a state that the travel distance of the vehicle is 0 to several km and Pt is scarcely deteriorated. The "normal catalyst" indicates the NOx catalyst 4 in which the degree of deterioration is within an allowable range although Pt is deteriorated. The "deteriorated catalyst" indicates the NOx catalyst 4 in which the degree of deterioration exceeds the allowable range.

As shown in Fig. 5, it is appreciated that the amount of production of NH₃ is decreased depending on the deterioration of the NOx catalyst 4 at the rich air-fuel ratio. A rich air-fuel ratio, which is approximate to the theoretical air-fuel ratio, is provided in the rich spike control performed to reduce NOx (hereinafter referred to as "ordinary rich spike control" as well). However, it is appreciated that the difference in the NH₃ concentration is small between the "normal catalyst" and the "deteriorated catalyst" in the vicinity of the theoretical air-fuel ratio. Therefore, when the deterioration judgment is performed for the NOx catalyst 4, if the reducing agent is supplied so that the state or condition is further deviated to the rich side as compared with the situation in which the ordinary rich spike control is performed, then it is possible to enhance the accuracy of the deterioration judgment. For example, with reference to Fig. 5, it is also appropriate to provide a target of the air-fuel ratio at which the NH₃ concentration is most raised. Further, with reference to Fig. 5, it is also appropriate to provide a target of the air-fuel ratio at which the difference in the NH₃ concentration between the "normal catalyst" and the "deteriorated catalyst" is maximized. In this context, the amount of production of NH₃ in the NOx catalyst 4 is affected by the air-fuel ratio and the amount of NOx absorbed by the NOx catalyst 4. That is, the amount of absorption of NOx and the air-fuel ratio, which are optimum for the production of NH₃, are present. It is possible to enhance the judgment accuracy by judging the deterioration of the NOx catalyst 4 on the basis of the NH₃ concentration provided when the amount of absorption of NOx and the air-fuel ratio, which are optimum for the production of NH₃, are brought about.

The ordinary rich spike control may be performed to reduce NOx absorbed by the NOx catalyst 4 before performing the deterioration judgment for the NOx catalyst 4. Accordingly, it is possible to reduce the amount of NOx allowed to outflow from the NOx catalyst 4 during the deterioration judgment for the NOx catalyst 4.

It is possible to judge the deterioration of the NOx catalyst 4 on the basis of the detected value of the downstream side NOx sensor 8 provided when the valve opening time of the injection valve 5 is controlled so that the air-fuel ratio of the exhaust gas is rich. For example, if the maximum value of the detected values of the downstream side NOx sensor 8 is not more than a threshold value during a predetermined period of time after starting the supply of the reducing agent, it is judged that the NOx catalyst 4 is deteriorated. Alternatively, if the added-up value of the detected values of the downstream side NOx sensor 8 is not more than a threshold value during a predetermined period of time after starting the supply of the reducing agent, it is also allowable to judge that the NOx catalyst 4 is deteriorated.

If the NOx catalyst 4 is a fresh product, i.e., if the travel distance of the vehicle is 0 to several km, then Pt does not suffer from any deterioration. Therefore, even when the reducing agent is supplied so that the rich air-fuel ratio is provided, then NO is actively reacted with H₂ or HC, and NO is reduced into N₂. For this reason, the detected value of the downstream side NOx sensor 8 is decreased. Therefore, it is difficult to discriminate this case from a case in which the NOx catalyst 4 is deteriorated. In relation thereto, for example, when the NOx catalyst 4 is a fresh product, the supply time of the reducing agent is prolonged during the deterioration judgment for the NOx catalyst 4, as compared with when the NOx catalyst 4 is anything other than the fresh product. It is also allowable that the supply time of the reducing agent is prolonged during the deterioration judgment for the NOx catalyst 4 when the travel distance of the vehicle is not more than a predetermined value as compared with when the travel distance of the vehicle exceeds the predetermined value. The predetermined value is an upper limit value of the travel distance at which the NOx catalyst 4 is regarded as the fresh product. That is, the reducing agent is further supplied after NO is reacted with H₂ or HC and NO is reduced into N₂. Accordingly, NO is reacted with H₂ or HC and NH₃ is produced. Accordingly, even when the NOx catalyst 4 is the fresh product, NH₃ is detected by the downstream side NOx sensor 8. Therefore, it is possible to correctly perform the deterioration judgment for the NOx catalyst 4.

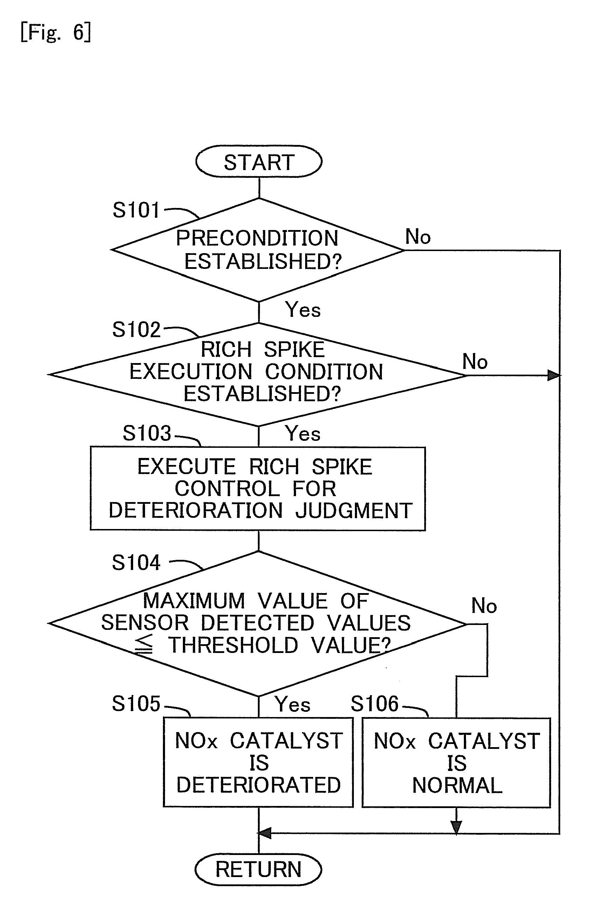

Fig. 6 shows a flow chart illustrating a flow of the deterioration judgment for the NOx catalyst 4. This routine is executed every time when a predetermined period of time elapses.

In Step S101, it is judged whether or not the precondition to perform the deterioration judgment for the NOx catalyst 4 is established. It is judged that the precondition is established, for example, if the downstream side NOx sensor 8 is normal and the temperature of the NOx catalyst 4 is a temperature appropriate to reduce NOx. It is possible to judge whether or not the downstream side NOx sensor 8 is normal, by means of any well-known technique. The temperature appropriate to reduce NOx is, for example, a temperature at which the NOx catalyst 4 is activated. The temperature of the NOx catalyst 4 is detected by the temperature sensor 9.

If the affirmative judgment is made in Step S101, the routine proceeds to Step S102. If the negative judgment is made, this routine comes to an end.

In Step S102, it is judged whether or not the rich spike execution condition is established. The rich spike execution condition is the condition to perform the rich spike control in order to perform the deterioration judgment for the NOx catalyst 4. For example, if NOx, which is in a amount of not less than a predetermined amount, is absorbed by the NOx catalyst 4, it is judged that the rich spike execution condition is established. The amount of NOx absorbed by the NOx catalyst 4 is calculated on the basis of the NOx concentration detected by the upstream side NOx sensor 7. The predetermined amount referred to herein is previously determined, for example, by means of an experiment, as the value at which NH₃ is produced to such an extent that the deterioration judgment can be performed when the reducing agent is supplied. That is, when NOx is not absorbed by the NOx catalyst 4, even if the NOx catalyst 4 is normal, then NH₃ is not produced. In such a situation, it is difficult to perform the deterioration judgment. Therefore, the condition resides in the fact that NOx of not less than the predetermined amount is absorbed by the NOx catalyst 4.

If the affirmative judgment is made in Step S102, the routine proceeds to Step S103. If the negative judgment is made, this routine comes to an end.

In Step S103, the rich spike control is performed for judging the deterioration of the NOx catalyst 4. That is, the rich spike control is performed within a range in which the air-fuel ratio is richer than the theoretical air-fuel ratio. For example, in the case of the deteriorated catalyst shown in Fig. 5, it is also allowable that the reducing agent amount is regulated to provide an air-fuel ratio in the vicinity of the air-fuel ratio at which the NH₃ concentration is maximized.

The time, in which the rich spike control is performed, may be prolonged when the travel distance of the vehicle is not more than a predetermined value as compared with when the travel distance of the vehicle exceeds the predetermined value. That is, it is also allowable to perform the rich spike control until NH₃ is produced when it is affirmed that the NOx catalyst 4 is a fresh product.

In Step S104, it is judged whether or not the maximum value of the detected values of the downstream side NOx sensor 8 is not more than the threshold value. The threshold value is a detected value to serve as the boundary of whether or not the NOx catalyst 4 is deteriorated, and the threshold value is set beforehand. The maximum value is a maximum value which is obtained within 10 seconds after the rich spike control is started. In this step, it is also allowable to judge whether or not the added-up value of the detected values of the downstream side NOx sensor 8 is not more than the threshold value. The added-up value may be an added-up value which is obtained during the period in which NH₃ is detected by the downstream side NOx sensor 8 in accordance with the rich spike control. Alternatively, the added-up value may be an added-up value which is obtained during the period in which the rich spike control is performed. Further alternatively, the added-up value may be an added-up value which is obtained during a predetermined time. The added-up value is obtained, for example, by successively adding the detected values of the downstream side NOx sensor 8 read at a predetermined cycle.

In the affirmative judgment is made in Step S104, then the routine proceeds to Step S105, and it is judged that the NOx catalyst 4 is deteriorated. On the other hand, if the negative judgment is made in Step S104, then the routine proceeds to Step S106, and it is judged that the NOx catalyst 4 is normal. In this embodiment, ECU 10, which processes Step S103 to Step S106, corresponds to the judging unit according to the present invention.

In this way, it is possible to perform the deterioration judgment for the NOx catalyst 4 on the basis of the detected value of the downstream side NOx sensor 8 when the reducing agent is supplied so that the rich air-fuel ratio is provided. In this procedure, it is possible to immediately perform the deterioration judgment provided that the maximum value of the detected values of the downstream side NOx sensor 8 is known. Therefore, it is unnecessary to wait until the detected value is stabilized, and it is unnecessary to wait until NOx is absorbed. That is, it is possible to perform the deterioration judgment quickly.

In this embodiment, it is also allowable to judge that the degree of deterioration of the NOx catalyst 4 is higher, as the maximum value of the detected values of the downstream side NOx sensor 8 is smaller, when the rich spike control is performed within a range in which the air-fuel ratio is richer than the theoretical air-fuel ratio. Similarly, it is also allowable to judge that the degree of deterioration of the NOx catalyst 4 is higher, as the added-up value of the detected values of the downstream side NOx sensor 8 is smaller.

### PARTS LIST

1: internal combustion engine, 2: exhaust gas passage, 4: absorption reduction type NOx catalyst, 5: injection valve, 7: upstream side NOx sensor, 8: downstream side NOx sensor, 9: temperature sensor, 10: ECU, 11: accelerator pedal, 12: accelerator opening degree sensor, 13: crank position sensor.

## Claims

1. A catalyst deterioration judging system for judging deterioration of an absorption reduction type NOx catalyst which is provided at an exhaust gas passage of an internal combustion engine to absorb NOx and which reduces the absorbed NOx in accordance with supply of a reducing agent, the catalyst deterioration judging system comprising:
a supply unit which supplies the reducing agent to the absorption reduction type NOx catalyst and which thereby changes an air-fuel ratio of an exhaust gas allowed to pass through the absorption reduction type NOx catalyst;
an NH₃ detecting unit which detects NH₃ contained in the exhaust gas at a downstream position from the absorption reduction type NOx catalyst;
a control unit which regulates an amount of the reducing agent so that the air-fuel ratio of the exhaust gas is a rich air-fuel ratio when the reducing agent is supplied from the supply unit; and
a judging unit which judges that the absorption reduction type NOx catalyst is deteriorated if a detected value of the NH₃ detecting unit is not more than a threshold value within a predetermined time immediately after starting the supply of the reducing agent from the supply unit while regulating the amount of the reducing agent so that the air-fuel ratio of the exhaust gas is the rich air-fuel ratio by means of the control unit when NOx is absorbed by the absorption reduction type NOx catalyst.

2. The catalyst deterioration judging system according to claim 1, wherein the predetermined time is 10 seconds.

3. The catalyst deterioration judging system according to claim 1 or 2, wherein the judging unit judges that the absorption reduction type NOx catalyst is deteriorated if a maximum value of the detected values of the NH₃ detecting unit is not more than the threshold value.

4. The catalyst deterioration judging system according to claim 1 or 2, wherein the judging unit judges that the absorption reduction type NOx catalyst is deteriorated if an added-up value of the detected values of the NH₃ detecting unit is not more than the threshold value.

5. The catalyst deterioration judging system according to any one of claims 1 to 4, wherein the control unit regulates the amount of the reducing agent so that the air-fuel ratio of the exhaust gas is the rich air-fuel ratio and an amount of production of NH₃ is maximized at the air-fuel ratio.

6. The catalyst deterioration judging system according to any one of claims 1 to 5, wherein the NH₃ detecting unit is a NOx sensor which detects NOx and NH₃ contained in the exhaust gas.
